# EUROPEAN PATENT APPLICATION

(11) **EP 3 557 668 A1**
(43) Date of publication of application: **23.10.2019**
(21) Application number: 17883636.7
(22) Date of filing: 01.12.2017
(51) Int. Cl.: H01M 4/525, H01M 4/505, H01M 10/0525

(54) **TERNARY MATERIAL AND PREPARATION METHOD THEREFOR, BATTERY SLURRY, POSITIVE ELECTRODE, AND LITHIUM BATTERY**

(30) Priority: 20.12.2016 CN 201611187632
(71) Applicant: BYD Company Limited, Shenzhen, Guangdong 518118 (CN)
(72) Inventor: CHEN, Jinghua, Shenzen Guangdong 518118 (CN); YOU, Junfei, Shenzen Guangdong 518118 (CN); XU, Chaqing, Shenzen Guangdong 518118 (CN); CAO, Wenyu, Shenzen Guangdong 518118 (CN)
(74) Representative: Hoffmann Eitle
(86) International application number: PCT/CN2017/114264
(87) International publication number: WO 2018/113506

(57) **Abstract**

The present invention discloses a ternary material and a preparation method thereof, a battery slurry, a positive electrode and a lithium battery. The ternary material has a composition represented by the general formula LiNi_{1-x-y}CoₓM_{y}O₂, where the M is Mn or Al, 0<x<1, 0<y<1, x+y<1; and particles of the ternary material include three-level particles having a particle diameter ranging from small to large, the three-level particles include primary particles having a crystal structure, intermediate particles formed by partial melting of a plurality of primary particles, and secondary spheres formed by agglomeration of the intermediate particles.

## Description

### FIELD

The present invention relates to the field of lithium battery production, in particular to a ternary material and a preparation method thereof, a battery slurry, a positive electrode and a lithium battery.

### BACKGROUND

Lithium-ion batteries have received extensive attention due to a series of significant advantages such as high operating voltage, large specific energy, light weight, small size, long cycle life, no memory effect, fast charge and discharge and no environmental pollution. Two major tasks of lithium-ion battery research are to improve performance (mainly high energy density and power density, long life, safety) and reduce cost. The positive electrode material is the key to improving the performance of lithium-ion batteries, which determines the main performance indicators of lithium-ion batteries.

In recent years, the newly formed layered lithium intercalated ternary material Li-Ni-Co-Mn-O composite oxide has developed rapidly, and a representative product is lithium nickel cobalt manganese oxide (LiNi_{1/3}Co_{1/3}Mn_{1/3}O₂). Such materials have stable electrochemical performance, high discharge capacity and discharge rate, good thermal stability and good safety, have the comprehensive performance being superior to any single-component compound, and are new positive electrode materials that are expected to replace lithium cobaltate. The existing preparation methods of the ternary materials mainly include two kinds, one is a conventional high-temperature solid phase method, and the other is a conventional hydrothermal method.

The conventional high-temperature solid phase method for preparing the ternary material is achieved by mixing a ternary material precursor and a lithium source and then performing high-temperature sintering. This method has the following problems: (1) after the material is sintered for a long time at a high temperature, primary particles are larger, generally exceeding 500 nm, and even reaching a micron level; the material of the large particles has a small specific surface area, thus has not bad high-temperature storage and high-temperature cycle performance and high compaction density, but has poor low-temperature performance and high-current rate performance, and therefore, cannot meet the requirement of a power battery for high rate performance; (2) the ternary material is prepared by mixing the precursor and the lithium salt and then performing high-temperature sintering; the diffusion of the lithium element into the interior of the precursor secondary sphere at high temperature requires long-time high-temperature sintering, and it is necessary to add a lithium salt that exceeds the theoretical measurement value by nearly 10% to ensure sufficient distribution of lithium, which will increase the material cost; in addition, the excess lithium salt that is not sufficiently diffused into the interior of the secondary sphere will be distributed in a form of free lithium on the surface of the secondary sphere, which will cause the pH of the material to be high and the powder resistance of the material to be large. This will eventually cause problems such as great thickness variation and great increase in internal resistance during high-temperature storage and cycle of a battery, which greatly reduces the safety performance of the battery.

The conventional hydrothermal method for preparing the ternary material (such as the patent application CN201410184691.5) includes: adding a positive electrode material precursor, a lithium compound and water to an autoclave; then raising the temperature to a specified temperature T, keeping the temperature constant under supercritical hydrothermal conditions for a period of time H1, adding an oxidant by a booster pump under high temperature and high pressure, and keeping the temperature constant for a period of time H2; and cooling to room temperature, and after washing by pressure filtration, sending a final product to an atmosphere furnace for sintering. This method has the following problems: (1) when the ternary material is prepared by the traditional hydrothermal method, primary particles are small (generally within 300 nm), loosely dispersed, and are difficult to agglomerate into secondary spheres; the material has very large specific surface area, large contact area with electrolyte, and good capacity, low-temperature performance and rate performance, but the compaction density of the material is low, generally only 2.9 g/cm³, which is far lower than that of the ternary material prepared by the solid phase method; the energy density is about 20% lower than that of the ternary material prepared by the solid phase method; and therefore, the material has poor high-temperature storage performance, high-temperature cycle performance and normal temperature cycle performance, and cannot meet the requirements of the use of the power battery; (2) according to the ternary material prepared by the traditional hydrothermal method, since the lithium content is low, generally lower than the theoretical metering ratio, lithium will be further lost in the later high-temperature sintering process, and after the material lacks lithium, a final battery has poor cycle performance and short battery life.

### SUMMARY

An objective of the present invention is to provide a ternary material and a preparation method thereof, a battery slurry, a positive electrode and a lithium battery to balance the electrochemical performance of a lithium battery using the ternary material at low temperature, high temperature and high rate.

To achieve the above objective, according to a first aspect of the present invention, a ternary material is provided, where the ternary material has a composition represented by the general formula LiNi_{1-x-y}CoₓM_{y}O₂, where the M is Mn or Al, 0<x<1, 0<y<1, x+y<1; and particles of the ternary material include three-level particles having a particle diameter ranging from small to large, the three-level particles include primary particles having a crystal structure, intermediate particles formed by partial melting of a plurality of primary particles, and secondary spheres formed by agglomeration of the intermediate particles.

According to a second aspect of the present invention, a preparation method of a ternary material is provided, where the preparation method includes the following steps: S1, dissolving a soluble nickel salt, a cobalt salt, an M salt, a first lithium source and an oxidant system in a solvent to prepare a mixed solution, where the M is manganese or aluminum; S2, promoting an oxidation reaction of the mixed solution, after the reaction, filtering, washing, and drying an oxidation reaction product to obtain a powder product, and then mixing a second lithium source into the powder product to obtain mixed powder; S3, performing primary sintering on the mixed powder to obtain secondary spheres; andS4, performing secondary sintering on the secondary spheres to obtain the ternary material; where the temperature of the secondary sintering is higher than the temperature of the primary sintering.

According to a third aspect of the present invention, a ternary material prepared by the above preparation method according to the present invention is provided.

According to a fourth aspect of the present invention, a battery slurry is provided, where the battery slurry is a slurry composition with a solid content of 10-70 wt%, being prepared from the ternary material according to the present invention.

According to a fifth aspect of the present invention, a positive electrode is provided, where the positive electrode includes a current collector and a positive electrode material layer disposed on the current collector, and the positive electrode material layer includes the ternary material according to the present invention.

According to a sixth aspect of the present invention, a lithium battery is provided, where the lithium battery includes a positive electrode, and the positive electrode includes the positive electrode according to the present invention.

Particles of the ternary material provided by the present invention include three-level particles having a particle diameter ranging from small to large, specifically are primary particles (minimum constitutional unit) having a crystal structure, intermediate particles formed by partial melting of a plurality of primary particles, and secondary spheres formed by agglomeration of the intermediate particles. The above technical solutions of the present invention have the following technical effects:
(1) by forming the primary particles and utilizing the characteristic of smaller particle diameter of the primary particles, the ternary material has a short lithium ion deintercalation path, thereby optimizing the capacity, low-temperature performance and rate performance of the lithium battery using the ternary material;
(2) by forming the secondary spheres, the primary particles are agglomerated together to reduce the specific surface area and porosity of the ternary material under the same weight, increase the compaction density of the ternary material and reduce thermal expansion and resistance change, thereby improving the safety performance of the lithium battery using the ternary material;
(3) by forming the intermediate particles, the loose primary particles agglomerated in the secondary spheres can be partially fused together to increase the compaction density and energy density of the ternary material, and optimize the heat storage performance and thermal cycle performance of the lithium battery using the ternary material; and
(4) by making the particles of the ternary material include three-level particles at the same time, the ternary material simultaneously has excellent low-temperature and rate performance of small particles and good high-temperature storage and high-temperature cycle performance of large particles.

Other features and advantages of the present invention will be described in detail in the following detailed description.

### BRIEF DESCRIPTION OF THE DRAWINGS

The accompanying drawings are included to provide a further understanding of the present invention and constitute a part of the specification, and are used for explaining the present invention together with the specific implementations below, but are not intended to limit the present invention. In the accompanying drawings:
FIG. 1 shows a scanning electron microscope (SEM) atlas of a ternary material prepared according to Embodiment 1 of the present invention at a magnification of 3K;
FIG. 2 shows a scanning electron microscope (SEM) atlas of a ternary material prepared according to Embodiment 1 of the present invention at a magnification of 50K;
FIG. 3 shows a scanning electron microscope (SEM) atlas of a ternary material prepared according to Comparative Embodiment 1 of the present invention at a magnification of 50K; and
FIG. 4 shows a scanning electron microscope (SEM) atlas of a ternary material prepared according to Comparative Embodiment 2 of the present invention at a magnification of 50K.

### DETAILED DESCRIPTION

Specific implementations of the present invention are described in detail below. It should be understood that the specific implementations described herein are merely for illustrating and explaining the present invention and are not intended to limit the present invention.

The endpoints and any values of the ranges disclosed herein are not limited to the precise range or value, and such ranges or values should be understood to include values that are close to the ranges or values. For numerical ranges, the endpoint values of the various ranges, the endpoint values of the various ranges and the individual point values, and the individual point values can be combined with one another to yield one or more new numerical ranges, and these numerical ranges should be considered as specifically disclosed herein.

In view of the problem that the ternary materials prepared by the conventional high-temperature solid phase method or the conventional hydrothermal method in the prior art cannot balance the electrochemical performance of a lithium battery using the ternary material at low temperature, high temperature and high rate, the present invention provides a ternary material, where the ternary material has a composition represented by the general formula LiNi_{1-x-y}CoₓM_{y}O₂, where the M is Mn or Al, 0<x<1, 0<y<1, x+y<1; and particles of the ternary material include three-level particles having a particle diameter ranging from small to large, the three-level particles include primary particles having a crystal structure, intermediate particles formed by partial melting of a plurality of primary particles, and secondary spheres formed by agglomeration of the intermediate particles.

The "primary particle" and "secondary sphere" mentioned in the present invention are all conventional terms in the industry, where the "primary particle" is the minimum particle unit having a crystal structure in the ternary material particles, such as a grain of rice in a rice ball. The "secondary sphere" refers to a particle formed by sintering, and the main difference between the "secondary sphere" in the present invention and the "secondary sphere" in the prior art is that the "secondary sphere" in the prior art is agglomerated from primary particles, in which no intermediate particle is present; and the "secondary sphere" in the present invention is agglomerated from intermediate particles.

The "intermediate particle" mentioned in the present invention is a new concept proposed for the first time in the present application, which is agglomerated in the secondary sphere and formed by partial melting of a plurality of primary particles. A plurality of intermediate particles is agglomerated in each of the secondary spheres to satisfy the particle diameter requirement of the secondary sphere, and the grain boundary between the intermediate particle and the intermediate particle agglomerated in the secondary sphere is distinct. Each intermediate particle can be easily separated by a scanning electron microscope (SEM) atlas. A plurality of primary particles is fused in each intermediate particle to satisfy the particle diameter requirements of the intermediate particle, and the boundary line of the primary particles for fusing each intermediate particle can be seen by a scanning electron microscope (SEM) atlas.

According to the ternary material of the present invention, preferably, the ternary material has a composition represented by the general formula LiNi_{1-x-y}CoₓM_{y}O₂, where the M is Mn or Al, and 0.05≤x≤0.4, 0.03≤y≤0.5.

According to the ternary material of the present invention, a deintercalation path of lithium ions in the ternary material can be adjusted by controlling the average particle diameter of the primary particles. Preferably, the primary particles have an average particle diameter of less than 500 nm, preferably 10-200 nm. By reducing the size of the primary particle diameter, the deintercalation path of lithium ions in the selected ternary material further optimizes the capacity, low-temperature performance and rate performance of the lithium battery using the ternary material.

According to the ternary material of the present invention, the compaction density and the energy density of the ternary material can be favorably adjusted by controlling the average particle diameter of the intermediate particles. Preferably, the intermediate particles have an average particle diameter of less than 3 µm, preferably 500 nm-2 µm. By adjusting the size of the intermediate particles, the compaction density and the energy density of the ternary material can be favorably increased while reducing the particle diameter of the primary particles, thereby further optimizing the capacity, low-temperature performance and rate performance of the lithium battery using the ternary material.

According to the ternary material of the present invention, by controlling the particle size and density of the intermediate layer and the secondary sphere, the compaction density of the ternary material can be favorably increased and the thermal expansion and resistance change can be favorably reduced under the condition of reducing the specific surface area and porosity of the ternary material with the same weight. Preferably, the secondary spheres have an average particle diameter of 1-20 µm, preferably 5-20 µm.

According to the ternary material of the present invention, the average particle diameters of the primary particles, the intermediate particles and the secondary spheres are calculated by sequentially measuring the size of 100 target particles in an SEM photograph at a magnification of 10K, and then calculating an average value as the average particle diameter of the particles of this level.

According to the ternary material of the present invention, by adjusting the particle diameters of the primary particles, the intermediate particles and the secondary spheres to adjust the overall compaction density of the ternary material, the capacity, low-temperature performance and rate performance of the lithium battery using the ternary material can be favorably optimized. Preferably, the ternary material has a compaction density of greater than 3.2 g/cm³, preferably greater than 3.3 g/cm³, and more preferably 3.4-3.7 g/cm³.

According to the ternary material of the present invention, by adjusting the powder impedance of the ternary material, the thickness and internal resistance change of a ternary material layer on the surface of the positive electrode during high-temperature storage and cycle of the lithium battery can be favorably improved, so as to optimize the high-temperature storage performance and cycle performance of the corresponding lithium battery. Preferably, when the ternary material is under a pressure of 500 N, the pure ternary material has a powder impedance of 0.1-13 kΩ, preferably 0.1-5 kΩ, and more preferably 0.1-1 kΩ.

Meanwhile, the present invention further provides a preparation method of a ternary material, where the preparation method includes the following steps: S1, dissolving a soluble nickel salt, a cobalt salt, an M salt, a first lithium source and an oxidant system in a solvent to prepare a mixed solution, where the M is manganese or aluminum; S2, promoting an oxidation reaction of the mixed solution, after the reaction, filtering, washing, and drying an oxidation reaction product to obtain precursor powder, and then mixing a second lithium source into the precursor powder to obtain mixed powder; S3, performing primary sintering on the mixed powder to obtain secondary spheres; and S4, performing secondary sintering on the secondary spheres to obtain the ternary material; where the temperature of the secondary sintering is higher than the temperature of the primary sintering.

The method provided by the present invention can form the above-mentioned ternary material having three-level particles of the present invention. Moreover, the method can not only satisfy the requirement of the ternary material for the lithium salt content, but also reduce the content of excess lithium salt dispersed on the surface of the secondary sphere by mixing the second lithium source into the precursor powder, thereby reducing the pH value and powder resistance of the material, which in turn reduces the increase of the thickness and the increase of the internal resistance of the battery during high-temperature storage and cycle

According to the preparation method of the present invention, the primary particles have an average particle diameter of less than 500 nm, preferably 10-200 nm; and the intermediate particles have an average particle diameter of less than 3 µm, preferably 500 nm-2 µm, and the secondary spheres have an average particle diameter of 1-20 µm, preferably 5-20 µm.

According to the preparation method of the present invention, the oxidant system includes an oxidant and a pH adjusting agent, and the step of preparing the mixed solution in S1 includes steps of: S11, dissolving the nickel salt, the cobalt salt and the M salt in the solvent to form a solution A; S12, dissolving the oxidant in the solvent to form a solution B; S13, dissolving the pH adjusting agent and the first lithium source in the solvent to form a solution C; and S14, stirring and mixing the solution A, the solution B and the solution C, and continuously stirring for 30-60 min after mixing to obtain the mixed solution; where when the M salt and the oxidant are simultaneously potassium permanganate, the potassium permanganate is partially dissolved in the solution A, partially dissolved in the solution B, or all dissolved in the solution B.

According to the preparation method of the present invention, the molar ratio of Ni, Co and M elements in the mixed solution is (1-x-y):x:y, where 0.05≤x≤0.4, 0.03≤y≤0.5.

According to the preparation method of the present invention, the molar weight of Li in the mixed solution is 1 to 8 times the total molar weight of Ni, Co and M. By controlling the molar dosage of the first lithium source to be within this range, the lithium entering a lattice position can be favorably ensured to satisfy 70-80% of the required amount.

According to the preparation method of the present invention, the oxidant is used in an amount such that a combined valence of Ni, Co and M in the mixed solution is +3, which can be selected according to the raw materials and dosage conventionally employed in the art; preferably, the oxidant is one or more selected from hydrogen peroxide, potassium permanganate and sodium thiosulfate; preferably, the pH adjusting agent is one or more selected from ammonia water, sodium hydroxide, potassium hydroxide, sulfuric acid, nitric acid and hydrochloric acid. When the oxidant is potassium permanganate, the potassium permanganate can also supply manganese ions to the mixed solution. In this case, the dosage of a manganese source is required to be reduced so that the total molar weight of manganese ions in the mixed solution is the required amount.

The "combined valence of Ni, Co, and M is +3" as used in the present invention means that the ratio of the sum of the product of the valence and the mole number of Ni, the product of the valence and the mole number of Co and the product of the valence and the mole number of M to the total mole number of Ni, Co and M is 3.

According to the preparation method of the present invention, preferably, the oxidant is potassium permanganate, the pH adjusting agent is a mixture of sodium hydroxide and ammonia water (NH₃·H₂O), the molar ratio of the sodium hydroxide to the ammonia water is 1-10:1, and the pH adjusting agent is added in an amount such that the pH value of the mixed solution is 8-10.

According to the preparation method of the present invention, preferably, the solvent for preparing the solution A, the solution B and the solution C includes, but is not limited to, one or more of deionized water, ethanol and acetone. Preferably the solvent is deionized water. Preferably, the concentration of the prepared solution A, solution B and solution C is not particularly required. Preferably, the concentration of the solution A is 0.1-3 mol/L, the concentration of the solution B is 0.1-3 mol/L, and the concentration of the solution C is 0.1-3 mol/L.

According to the production method of the present invention, preferably, in S14, the solution A, the solution B and the solution C are stirred and mixed under an inert atmosphere. The inert atmosphere is formed by charging one or more of nitrogen, argon and helium.

According to the preparation method of the present invention, the conditions for the oxidation reaction in S2 may not be required as long as the reaction of the Ni, Co and M elements in the mixed solution can be promoted until the combined valence is +3. Preferably, the conditions for the oxidation reaction include: firstly charging an oxygen-containing gas to the inside of a reactor until the internal pressure of the reactor is 0.6-1.2 Mpa, and then under a sealed condition, raising the internal temperature of the reactor to 170-220°C, and performing a reaction under constant temperature and constant pressure for 8 h or longer. Under high temperature and high pressure, sufficient reaction crystallization of lithium, nickel, cobalt and manganese can be ensured.

According to the preparation method of the present invention, the oxygen-containing gas used in the oxidation reaction in S2 may not be particularly required, and preferably, the higher the oxygen content in the oxygen-containing gas, the better. However, in view of the raw material cost, it is preferable that the oxygen content in the oxygen-containing gas is 50 vol% or above when the molar weight of Ni in the mixed solution is 50 wt% or above of the total mole number of the Ni, Co and Mn elements. The oxidation reaction of the Ni element can be more favorably promoted by increasing the oxygen in the oxygen-containing gas that is introduced, where the oxygen-containing gas is oxygen, air or a mixed gas of the two.

According to the preparation method of the present invention, the steps of drying the reaction product to obtain the precursor powder in S2 are not particularly required, and may be carried out by a conventional method in the art, for example, but not limited to, vacuum drying, inert gas protection heat drying, freeze drying, flash drying, high speed mixer vacuum drying, spray drying, and the like. Spray drying is preferred in the present invention.

According to the production method of the present invention, after the oxidation reaction, the steps of filtering and washing are further included, which remove excess Li ions in the oxidation reaction product. Preferably, the filtrate produced in the previous step of filtering is subjected to freezing crystallization treatment to recover excess lithium salt or the like in the filtrate so as to avoid waste of raw materials and reduce raw material cost. Preferably, the step of washing is performed by using deionized water, ethanol and acetone, and the washing liquid obtained by washing can be subjected to freezing crystallization treatment to recover excess lithium salt in the filtrate, at the same time, deionized water with the excess lithium salt (and potassium salt) removed can be reused as the solvent for the preparation of the solutions A, B and C.

According to the preparation method of the present invention, preferably, the step of mixing the second lithium source into the precursor powder in S2 includes steps of: measuring the molar weights of Li, Ni, Co and Mn in the precursor powder (for example, using atomic absorption spectrometry AAS and/or ICP spectrometry), and calculating the molar ratio of Li to the total amount of Ni, Co and Mn; according to the molar ratio of Li to the total amount of Ni, Co and Mn, converting the amount of the second lithium source added such that the molar ratio of Li to the total amount of Ni, Co and Mn in the mixed powder is (1-1.1):1; and mixing the precursor powder with the optional second lithium source in proportion to obtain the mixed powder.

According to the preparation method of the present invention, the conditions for the primary sintering in S3 are not particularly required, and reference may be made to the conventional sintering temperature in the process of sintering in the preparation of secondary spheres (corresponding to primary spheres formed by primary particle agglomeration in the prior art). Preferably, the conditions for the primary sintering include: sintering at 600-900°C, preferably 700-800°C, for 8 h or longer, preferably 8-24 h, in an oxygen-containing atmosphere.

According to the preparation method of the present invention, the conditions for the secondary sintering in S4 may not be particularly required as long as the temperature is higher than the temperature of the primary sintering. Preferably, the conditions for the secondary sintering include: sintering at 900-1100°C, preferably 900-1000°C, for 10-60 min in an oxygen-containing atmosphere.

According to the preparation method of the present invention, after the step of performing the primary sintering and the secondary sintering treatment, a step of cooling the produced particles may be further included, which may be natural cooling or accelerated cooling by controlling the external temperature.

According to the preparation method of the present invention, a nickel source is one or more selected from nickel sulfate, nickel nitrate and nickel chloride; a cobalt source is one or more selected from cobalt sulfate, cobalt nitrate and cobalt chloride; a manganese source is one or more selected from manganese sulfate, manganese nitrate, manganese chloride and potassium permanganate; and the first lithium source and the second lithium source are each independently one or more selected from lithium hydroxide, lithium carbonate, lithium chloride, lithium nitrate and lithium sulfate. Preferably, the first lithium source is lithium hydroxide.

According to the preparation method of the present invention, the step of stirring and mixing may be carried out in an optional mechanical mixer, shearing machine, homogenizer or high-speed mixer.

Furthermore, according to a third aspect of the present invention, a ternary material obtained by the above preparation method is further provided. The ternary material has a composition represented by the general formula LiNi_{1-x-y}CoₓM_{y}O₂, where the M is Mn or Al, 0<x<1, 0<y<1, x+y<1; and particles of the ternary material include three-level particles having a particle diameter ranging from small to large, the three-level particles include primary particles having a crystal structure, intermediate particles formed by partial melting of a plurality of primary particles, and secondary spheres formed by agglomeration of the intermediate particles. The ternary material prepared by the method has the same structure and properties as those of the aforementioned ternary material, specifically as described above.

In addition, according to a fourth aspect of the present invention, a battery slurry is further provided, where the battery slurry is a slurry composition with a solid content of 10-70 wt% being prepared from the above ternary material. The battery slurry further includes a binder and a conductive agent. The type and dosage of the binder and the conductive agent may be selected according to the conventional choice in the art. For example, the binder may be polyvinylidene fluoride or the like, and the conductive agent may be acetylene black or the like. The weight ratio of the ternary material, the conductive agent and the binder is 100:4:4.

According to a fifth aspect of the present invention, a positive electrode is further provided, where the positive electrode includes a current collector and a positive electrode material layer disposed on the current collector, and the positive electrode material layer includes the ternary material according to the present invention. Preferably, for the current collector, reference may be made to a conductive metal material conventionally used in the art, for example, but not limited to, platinum (Pt) foil, palladium (Pd) foil, aluminum (Al) foil, and the like.

According to a sixth aspect of the present invention, a lithium battery is further provided, where the lithium battery includes a positive electrode, and the positive electrode includes (is) the positive electrode provided by the present invention. According to the lithium battery provided by the present invention, by adopting the above positive electrode provided by the present invention, the normal-temperature cycle performance and the high-temperature cycle performance of the battery can be favorably improved.

The beneficial effects of the ternary material and the preparation method thereof as well as the battery slurry and the lithium battery of the present invention will be further described below in conjunction with specific embodiments and comparative embodiments.

In the following embodiments and comparative embodiments, the average particle diameters of the primary particles, the intermediate particles and the secondary spheres were measured through SEM photographs at a magnification of 10K by sequentially measuring sizes of 100 target particles and then averaging to serve as the average particle diameter of the particles of this level; the compaction density was measured by dispersing the ternary material, a conductive agent (acetylene black) and a binder (polyvinylidene fluoride) in a solution of N-methyl pyrrolidone (NMP) according to a weight ratio of 100:4:4 to form a battery slurry, coating the battery slurry on smooth aluminum foil having a thickness of 12 µm, performing drying, die cutting and tablet compressing under a pressure of 2 Mpa to form a positive electrode with a thickness of 37 µm, and calculating the weight of the ternary material applied per unit volume on the prepared positive electrode; and the powder resistance was measured by compacting the powder under a pressure of 500 N and directly testing the electrical resistance of the powder under a constant pressure of 500 N.

In the following embodiments and comparative embodiments, the scanning electron microscope (SEM) atlases were obtained by using an S4800 scanning electron microscope at different magnifications under a voltage of 5 KV. A sample was obtained by sticking ternary material powder on a conductive tape and performing metal spraying treatment, and the sample was dried and stored in a vacuum drying oven before the test.

### Embodiment 1

This embodiment is for explaining the ternary material and the preparation method thereof of the present invention, and the specific preparation method is as follows:

1 mol of NiSO4·6H2O (purity of 99.5%), 1 mol of CoSO4·7H2O (purity of 99.5%) and 0.4 mol of MnSO4·H2O (purity of 99.5%) were dissolved in 15 L of deionized water to form a solution A, 0.6 mol of KMnO4 (purity of 99.7%) was dissolved in 1.5 L of deionized water to form a solution B, and 3 mol of LiOH·H2O, 6 mol of NaOH and 0.6 mol of NH3·H2O were dissolved in 15 L of deionized water to form a solution C. The solutions A, B and C were separately fed into a reactor by metering pumps synchronously, and stirring was carried out for reaction while dropwise adding, during which the slurry was subjected to atmospheric protection with N2. After the completion of the dropwise addition, stirring was continued for 30 min to form a mixed solution (pH value of 8.5). The obtained mixed solution was then pumped into a 50 L high-pressure reactor (filling degree of approximately 70%). Then, air (the oxygen content of air was 20.947 vol%) was charged therein to reach a pressure of 0.8 MPa, the reactor was heated to 200°C, and then an oxidation reaction was performed for 24 hours. After natural cooling, the slurry was filtered and washed with deionized water for three times. Finally, the slurry was subjected to spray granulation by a spray dryer (the inlet temperature was 260°C, and the air outlet temperature was 110°C) to obtain precursor powder D (average particle diameter of 103 nm).

The molar weights of Li, Ni, Co and Mn in the precursor powder D were measured by a combination of AAS and IPC, and the molar ratio of Li, Ni, Co and Mn was calculated to be 0.78:0.34:0.33:0.33. 0.14 mol of Li2CO3 (purity of 99.5%) was added into 1 mol of the precursor powder D (Li0.78Ni1/3Co1/3Mn1/3O2) and mixed to form mixed powder, and the mixed powder was charged into a crucible; and in a tube furnace, compressed air was introduced, sintering was performed at a constant temperature of 800°C for 14 hours, then, the temperature was raised to 960°C to continue sintering for 20 minutes, and after natural cooling, a Li1.06Ni1/3Co1/3Mn1/3O2 material was obtained.

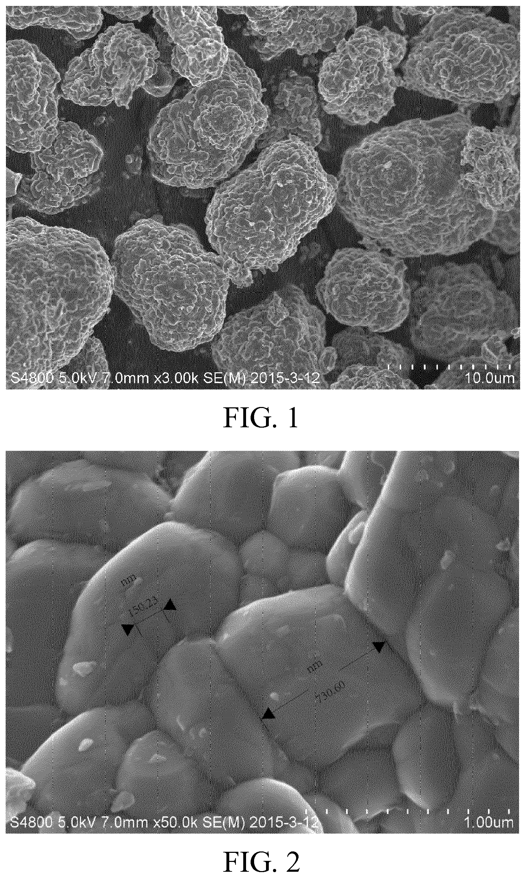

As shown in FIG. 1 and FIG. 2, FIG. 1 and FIG. 2 are scanning electron microscope (SEM) atlases of the Li1.06Ni1/3Co1/3Mn1/3O2 material prepared as described above at different magnifications. It can be seen from FIG. 1 that the size of the secondary spheres of the Li1.06NiCoMnO2 material was relatively uniform, and the average particle diameter of the secondary spheres was calculated to be 11.2 µm. It can be seen from FIG. 2 that the secondary spheres of the Li1.06Ni1/3Co1/3Mn1/3O2 material were agglomerated from intermediate particles, and a distinct boundary line of crystals having a primary particle diameter existed in the intermediate particles; the average particle diameter of the intermediate particles was calculated to be 896 nm, and the average particle diameter of the primary particles was calculated to be 142 nm. The Li1.06Ni1/3Co1/3Mn1/3O2 material prepared as described above had a compaction density of 3.56 g/cm³ and a powder impedance of 0.2 KΩ.

### Embodiment 2

This embodiment is for explaining the ternary material and the preparation method thereof of the present invention, and the specific preparation method is as follows:
1.5 mol of NiSO4·6H2O (purity of 99.5%), 0.6 mol of CoSO4·7H2O (purity of 99.5%) and 0.45 mol of MnSO4·H2O (purity of 99.5%) were dissolved in 15 L of deionized water to form a solution A, 0.45 mol of KMnO4 was dissolved in 1.5 L of deionized water to form a solution B, and 6 mol of LiOH·H2O, 6 mol of NaOH and 0.9 mol of NH3·H2O were dissolved in 15 L of deionized water to form a solution C. The solutions A, B and C were separately fed into a reactor by metering pumps synchronously, and stirring was carried out for reaction while dropwise adding, during which the slurry was subjected to atmospheric protection with N2. After the completion of the dropwise addition, stirring was continued for 30 min to form a mixed solution (pH value of 8.8). The obtained mixed solution was then pumped into a 50 L high-pressure reactor (filling degree of approximately 70%). Then, pure oxygen gas (the oxygen content was 99.999%) was charged therein to reach a pressure of 0.6 MPa, the reactor was heated to 220°C, and then an oxidation reaction was performed for 20 hours. After natural cooling, the slurry was filtered and washed with deionized water for three times. Finally, the slurry was subjected to spray granulation by a spray dryer (the inlet temperature was 260°C, and the air outlet temperature was 110°C) to obtain precursor powder D (average particle diameter of 122 nm).

The molar weights of Li, Ni, Co and Mn in the precursor powder D were measured by a combination of AAS and IPC, and the molar ratio of Li, Ni, Co and Mn was calculated to be 0.81:0.51:0.19:0.30. 1 mol of the precursor powder D and 0.099 mol of Li2CO3 (purity of 99.7%) were mixed to form mixed powder, and the mixed powder was charged into a crucible; and in a tube furnace, compressed air was introduced, sintering was performed at a constant temperature of 700°C for 20 hours, then, the temperature was raised to 900°C to continue sintering for 30 minutes, and after natural cooling, a Li1.04Ni0.51Co0.19Mn0.3O2 material was obtained.

It can be calculated from the scanning electron microscope (SEM) atlases of the Li1.04Ni0.51Co0.19Mn0.3O2 material prepared as described above at different magnifications that the secondary spheres of the Li1.04Ni0.51Co0.19Mn0.3O2 material had an average particle diameter of 12.4 µm, the intermediate particles had an average particle diameter of 893 nm, and the primary particles had an average particle diameter of 126 nm. It was detected that the Li1.04Ni0.51Co0.19Mn0.3O2 material prepared as described above had a compaction density of 3.61 g/cm³ and a powder impedance of 0.24 KΩ.

### Embodiment 3

This embodiment is for explaining the ternary material and the preparation method thereof of the present invention, and the specific preparation method is as follows:
1.8 mol of NiSO4·6H2O (purity of 99.5%), 0.6 mol of CoSO4·7H2O (purity of 99.5%) and 0.45 mol of MnSO4·H2O (purity of 99.5%) were dissolved in 15 L of deionized water to form a solution A, 0.15 mol of KMnO4 was dissolved in 1.5 L of deionized water to form a solution B, and 24 mol of LiOH·H2O, 6 mol of NaOH and 0.9 mol of NH3·H2O were dissolved in 15 L of deionized water to form a solution C. The solutions A, B and C were separately fed into a reactor by metering pumps synchronously, and stirring was carried out for reaction while dropwise adding, during which the slurry was subjected to atmospheric protection with N2. After the completion of the dropwise addition, stirring was continued for 30 min to form a mixed solution (pH value of 9.6). The obtained mixed solution was then pumped into a 50 L high-pressure reactor (filling degree of approximately 70%). Then, pure oxygen gas (the oxygen content was 99.999 wt%) was charged therein to reach a pressure of 1.2 MPa, the reactor was heated to 170°C, and then an oxidation reaction was performed for 10 hours. After natural cooling, the slurry was filtered and washed with deionized water for three times. Finally, the slurry was subjected to spray granulation by a spray dryer (the inlet temperature was 260°C, and the air outlet temperature was 110°C) to obtain precursor powder D (average particle diameter of 114 nm).

The molar weights of Li, Ni, Co and Mn in the precursor powder D were measured by a combination of AAS and IPC, and the molar ratio of Li, Ni, Co and Mn was calculated to be 0.86:0.61:0.19:0.20. 1 mol of the precursor powder D and 0.08 mol of Li2CO3 (purity of 99.7%) were mixed to form mixed powder, and the mixed powder was charged into a crucible; and in a tube furnace, compressed air was introduced to reach a pressure of 0.8 MPa, sintering was performed at a constant temperature of 750°C for 12 hours, then, the temperature was raised to 100°C to continue sintering for 15 minutes, and after natural cooling, a Li1.02Ni0.61Co0.19Mn0.2O2 material was obtained.

It can be calculated from the scanning electron microscope (SEM) atlases of the Li1.02Ni0.61Co0.19Mn0.2O2 material prepared as described above at different magnifications that the secondary spheres of the Li1.02Ni0.61Co0.19Mn0.2O2 material had an average particle diameter of 12.6 µm, the intermediate particles had an average particle diameter of 884 nm, and the primary particles had an average particle diameter of 118 nm. It was detected that the Li1.02Ni0.61Co0.19Mn0.2O2 material prepared as described above had a compaction density of 3.61 g/cm³ and a powder impedance of 0.3 KΩ.

### Embodiment 4

This embodiment is for explaining the ternary material and the preparation method thereof of the present invention, and the specific preparation method is as follows:
2.1 mol of NiSO4·6H2O (purity of 99.5%) and 0.45 mol of CoSO4·7H2O (purity of 99.5%) were dissolved in 15 L of deionized water to form a solution A, 0.45 mol of KMnO4 was dissolved in 1.5 L of deionized water to form a solution B, and 3 mol of LiOH·H2O, 10.5 mol of Li2SO4, 6 mol of NaOH and 1.2 mol of NH3·H2O were dissolved in 15 L of deionized water to form a solution C. The solutions A, B and C were separately fed into a reactor by metering pumps synchronously, and stirring was carried out for reaction while dropwise adding, during which the slurry was subjected to atmospheric protection with N2. After the completion of the dropwise addition, stirring was continued for 30 min to form a mixed solution (pH value of 8.6). The obtained mixed solution was then pumped into a 50 L high-pressure reactor (filling degree of approximately 70%). Then, pure oxygen gas (the oxygen content was 99.999 wt%) was charged therein to reach a pressure of 0.8 MPa, the reactor was heated to 183°C, and then an oxidation reaction was performed for 20 hours. After natural cooling, the slurry was filtered and washed with deionized water for three times. Finally, the slurry was subjected to spray granulation by a spray dryer (the inlet temperature was 260°C, and the air outlet temperature was 110°C) to obtain precursor powder D (average particle diameter of 128 nm).

The molar weights of Li, Ni, Co and Mn in the precursor powder D were measured by a combination of AAS and IPC, and the molar ratio of Li, Ni, Co and Mn was calculated to be 0.74:0.70:0.15:0.15. 1 mol of the precursor powder D and 0.28 mol of LiOH (purity of 99.27%) were mixed to form mixed powder, and the mixed powder was charged into a crucible; and in a tube furnace, pure oxygen gas having a purity of 99.999% was introduced, sintering was performed at a constant temperature of 780°C for 24 hours, then, the temperature was raised to 910°C to continue sintering for 20 minutes, and after natural cooling, a Li1.02Ni0.7Co0.15Mn0.15O2 material was obtained.

It can be calculated from the scanning electron microscope (SEM) atlases of the Li1.02Ni0.7Co0.15Mn0.15O2 material prepared as described above at different magnifications that the secondary spheres of the Li1.02Ni0.7Co0.15Mn0.15O2 material had an average particle diameter of 12.9 µm, the intermediate particles had an average particle diameter of 927 nm, and the primary particles had an average particle diameter of 134 nm. It was detected that the Li1.02Ni0.7Co0.15Mn0.15O2 material prepared as described above had a compaction density of 3.62 g/cm³ and a powder impedance of 0.19 KΩ.

### Embodiment 5

This embodiment is for explaining the ternary material and the preparation method thereof of the present invention, and the specific preparation method is as follows:
2.4 mol of NiSO4·6H2O (purity of 99.5%) and 0.3 mol of CoSO4·7H2O (purity of 99.5%) were dissolved in 15 L of deionized water to form a solution A, 0.3 mol of KMnO4 was dissolved in 1.5 L of deionized water to form a solution B, and 9 mol of LiOH·H2O, 7.5 mol of Li2SO4, 7.5 mol of NaOH and 0.9 mol of NH3·H2O were dissolved in 15 L of deionized water to form a solution C. The solutions A, B and C were separately fed into a reactor by metering pumps synchronously, and stirring was carried out for reaction while dropwise adding, during which the slurry was subjected to atmospheric protection with N2. After the completion of the dropwise addition, stirring was continued for 30 min to form a mixed solution (pH value of 9.0). The obtained mixed solution was then pumped into a 50 L high-pressure reactor (filling degree of approximately 70%). Then, pure oxygen gas (the oxygen content was 99.999 wt%) was charged therein to reach a pressure of 0.8 MPa, the reactor was heated to 180°C, and then an oxidation reaction was performed for 24 hours. After natural cooling, the slurry was filtered and washed with deionized water for three times. Finally, the slurry was subjected to spray granulation by a spray dryer (the inlet temperature was 260°C, and the air outlet temperature was 110°C) to obtain precursor powder D (average particle diameter of 102 nm).

The molar weights of Li, Ni, Co and Mn in the precursor powder D were measured by a combination of AAS and IPC, and the molar ratio of Li, Ni, Co and Mn was calculated to be 0.70:0.79:0.11:0.1. 1 mol of the precursor powder D and 0.31 mol of LiOH (purity of 99.27%) were mixed to form mixed powder, and the mixed powder was charged into a crucible; and in a tube furnace, pure oxygen gas having a purity of 99.999% was introduced, sintering was performed at a constant temperature of 760°C for 18 hours, then, the temperature was raised to 900°C to continue sintering for 20 minutes, and after natural cooling, a Li1.01Ni0.79Co0.11Mn0.1O2 material was obtained.

It can be calculated from the scanning electron microscope (SEM) atlases of the Li1.01Ni0.79Co0.11Mn0.1O2 material prepared as described above at different magnifications that the secondary spheres of the Li1.01NiO.79Co0.11Mn0.1O2 material had an average particle diameter of 13.7 µm, the intermediate particles had an average particle diameter of 706 nm, and the primary particles had an average particle diameter of 140 nm. It was detected that the Li1.01Ni0.79Co0.11Mn0.1O2 material prepared as described above had a compaction density of 3.56 g/cm³ and a powder impedance of 0.43 KΩ.

### Embodiment 6

This embodiment is for explaining the ternary material and the preparation method thereof of the present invention, and the specific preparation method is as follows: with reference to Embodiment 1, the difference is that the mixed powder was charged into a crucible; and in a tube furnace, compressed air was introduced, sintering was performed at a constant temperature of 900°C for 14 hours, then, the temperature was raised to 1100°C to continue sintering for 30 minutes, and after natural cooling, a Li1.06Ni1/3Co1/3Mn1/3O2 material was obtained.

It can be calculated from the scanning electron microscope (SEM) atlases of the Li1.06Ni1/3Co1/3Mn1/3O2 material prepared as described above at different magnifications that the secondary spheres of the Li1.06Ni1/3Co1/3Mn1/3O2 material had an average particle diameter of 12.4 µm, the intermediate particles had an average particle diameter of 2.6 µm, and the primary particles had an average particle diameter of 226 nm. It was detected that the Li1.06Ni1/3Co1/3Mn1/3O2 material prepared as described above had a compaction density of 3.6 g/cm³ and a powder impedance of 0.3 KΩ.

### Embodiment 7

This embodiment is for explaining the ternary material and the preparation method thereof of the present invention, and the specific preparation method is as follows:
2.46 mol of NiSO4·6H2O (purity of 99.5%), 0.45 mol of CoSO4·7H2O (purity of 99.5%) and 0.03 mol of Al3(SO4)2 (purity of 99.5%) were dissolved in 15 L of deionized water to form a solution A, 0.45 mol of sodium thiosulfate was dissolved in 1.5 L of deionized water to form a solution B, and 24 mol of LiOH·H2O, 6 mol of NaOH and 0.9 mol of NH3·H2O were dissolved in 15 L of deionized water to form a solution C. The solutions A, B and C were separately fed into a reactor by metering pumps synchronously, and stirring was carried out for reaction while dropwise adding, during which the slurry was subjected to atmospheric protection with N2. After the completion of the dropwise addition, stirring was continued for 30 min to form a mixed solution (pH value of 9.7). The obtained mixed solution was then pumped into a 50 L high-pressure reactor (filling degree of approximately 70%). Then, pure oxygen gas (the oxygen content was 99.999 wt%) was charged therein to reach a pressure of 1.5 MPa, the reactor was heated to 180°C, and then an oxidation reaction was performed for 24 hours. After natural cooling, the slurry was filtered and washed with deionized water for three times. Finally, the slurry was subjected to spray granulation by a spray dryer (the inlet temperature was 260°C, and the air outlet temperature was 110°C) to obtain precursor powder D (average particle diameter of 146 nm).

The molar weights of Li, Ni, Co and Mn in the precursor powder D were measured by a combination of AAS and IPC, and the molar ratio of Li, Ni, Co and Al was calculated to be 0.8:0.82:0.15:0.03. 1 mol of the precursor powder D and 0.21 mol of LiOH (purity of 99.27%) were mixed to form mixed powder, and the mixed powder was charged into a crucible; and in a tube furnace, pure oxygen gas having a purity of 99.999% was introduced, sintering was performed at a constant temperature of 760°C for 18 hours, then, the temperature was raised to 900°C to continue sintering for 10 minutes, and after natural cooling, a Li1.01Ni0.82Co0.15Al0.03O2 material was obtained.

It can be calculated from the scanning electron microscope (SEM) atlases of the Li1.01Ni0.82Co0.15Al0.03O2 material prepared as described above at different magnifications that the secondary spheres of the Li1.01Ni0.82Co0.15Al0.03O2 material had an average particle diameter of 14.2 µm, the intermediate particles had an average particle diameter of 1135 nm, and the primary particles had an average particle diameter of 153 nm. It was detected that the Li1.01Ni0.82Co0.15Al0.03O2 material prepared as described above had a compaction density of 3.64 g/cm³ and a powder impedance of 0.11 KΩ.

### Comparative Embodiment 1

This comparative embodiment is for explaining the ternary material and the preparation method thereof of the present invention as a reference, and the specific preparation method is as follows:
1 mol of NiSO4·6H2O (purity of 99.5%), 1 mol of CoSO4·7H2O (purity of 99.5%) and 1 mol of MnSO4·H2O (purity of 99.5%) were dissolved in 15 L of deionized water to form a solution A, 6 mol of NaOH and 0.6 mol of NH3·H2O were dissolved in 15 L of deionized water to form a solution B. The solutions A and B were separately fed into a reactor by metering pumps synchronously, and stirring was carried out for reaction while dropwise adding, during which the slurry was subjected to atmospheric protection with N2. After the completion of the dropwise addition, stirring was continued for 180 min to form a mixed solution. An obtained precipitate was filtered and washed with deionized water for three times, and then dried in a vacuum oven at 110°C under the protection of N2 for 24 hours to obtain precursor powder C (the average particle diameter of the secondary sphere was 12 µm).

The molar weights of Ni, Co and Mn in the precursor powder C were measured by a combination of AAS and IPC, and the molar ratio of Ni, Co and Mn was calculated to be 0.34: 0.33: 0.33. 0.53 mol of Li2CO3 (purity of 99.5%) was added into 1 mol of the precursor powder C and mixed to form mixed powder, and the mixed powder was charged into a crucible; and in a tube furnace, compressed air was introduced, sintering was performed at a constant temperature of 950°C for 14 hours, and then, after natural cooling, a Li1.06Ni1/3Co1/3Mn1/3O2 material was obtained.

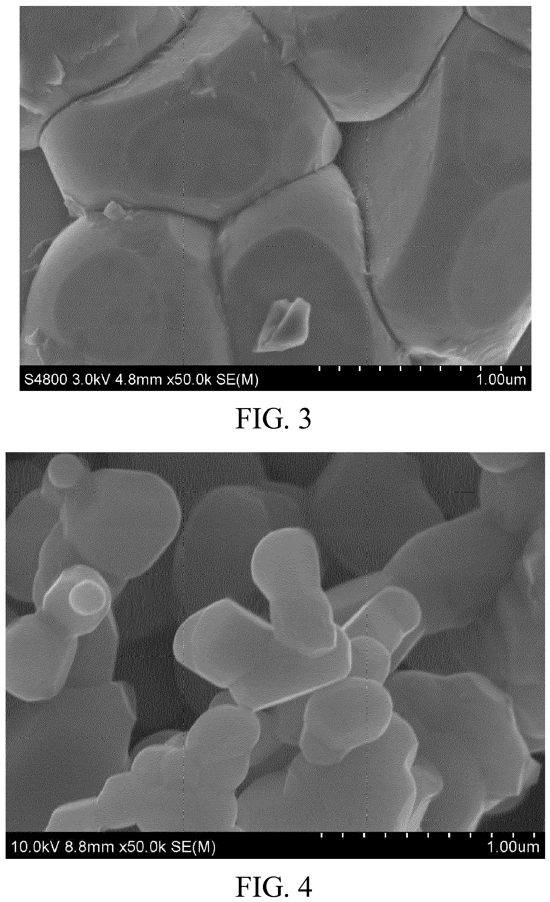

It can be seen from FIG. 3 that the Li1.06Ni1/3Co1/3Mn1/3O2 material was composed of two-level particles of minimum primary particles and secondary spheres formed by agglomeration of the primary particles, in which no intermediate particle was present. It can be seen from the figure that the size of the primary particles was larger, the average particle size reached 532 nm, and the average particle diameter of the secondary spheres was about 12.4 µm. The Li1.06Ni1/3Co1/3Mn1/3O2 material prepared as described above had a compaction density of 3.59 g/cm³ and a powder impedance of 26 KΩ.

### Comparative Embodiment 2

This comparative embodiment is for explaining the ternary material and the preparation method thereof of the present invention as a reference, and the specific preparation method is as follows:
40 mol of a positive electrode precursor Ni0.5Co0.2Mn0.3(OH)2, 40 mol of LiOH and 20 L of pure water were added to a high-pressure reactor, and then the temperature was raised to 220°C. After the temperature was kept constant for 2 h, 30 mol of hydrogen peroxide was added by a booster pump, and the temperature was kept constant for 5 h. After cooling to room temperature, pressure filtration and washing were performed to obtain a product to be sintered. The product was sent to a muffle furnace, and heated at a rate of 5°C/min at a pure oxygen flow rate of 0.8 m3/h. Then, the product was sintered at a constant temperature of 50°C for 2 h, sintered at a constant temperature of 100°C for 2 h, rapidly heated to 500°C and sintered at a constant temperature for 4 h, and sintered at a constant temperature of 780°C for 16 h. A LiNi0.5Co0.2Mn0.3O2 positive electrode material was obtained.

It can be seen from FIG. 4 that the LiNi0.5Co0.2Mn0.3O2 material had the minimum primary particles, and the primary particles were relatively loose, and did not form a tightly agglomerated secondary sphere structure. It was calculated that the primary particles had an average particle diameter of 121 nm. The LiNi0.5Co0.2Mn0.3O2 material prepared as described above had a compaction density of 1.8 g/cm³ and a powder impedance of 15 KΩ.

### Comparative Embodiment 3

This comparative embodiment is for explaining the ternary material and the preparation method thereof of the present invention as a reference, where the preparation method of the ternary material is as follows: with reference to the method in Embodiment 2, after the mixed powder was formed, the mixed powder was charged into a crucible; and in a tube furnace, compressed air was introduced, sintering was performed at a constant temperature of 960°C for 24 hours, and after natural cooling, a Li1.04Ni0.51Co0.19Mn0.3O2 material was obtained.

It can be calculated from the scanning electron microscope (SEM) atlases of the Li1.04Ni0.51Co0.19Mn0.3O2 material prepared as described above at different magnifications that the Li1.01Ni0.82Co0.15Al0.03O2 material was composed of two-level particles of minimum primary particles and secondary spheres formed by agglomeration of the primary particles, in which no intermediate particle was present. It can be seen from the figure that the secondary spheres had an average particle diameter of 12.9 µm, and the primary particles had an average particle diameter of 659 nm. It was detected that the Li1.01Ni0.82Co0.15Al0.03O2 material prepared as described above had a compaction density of 3.5 g/cm³ and a powder impedance of 0.4 KΩ.

### Comparative Embodiment 4

This comparative embodiment is for explaining the ternary material and the preparation method thereof of the present invention as a reference, where the preparation method of the ternary material is as follows: with reference to the method in Embodiment 1, the step that Li2CO3 was added to the precursor powder D and mixed to form mixed powder was not included, and the precursor powder D was directly charged into the crucible to perform the subsequent sintering step.

It can be calculated from the scanning electron microscope (SEM) atlases of the Li0.78Ni1/3Co1/3Mn1/3O2 material prepared as described above at different magnifications that the secondary spheres of the Li0.78Ni1/3Co1/3Mn1/3O2 material had an average particle diameter of 12.2 µm, the intermediate particles had an average particle diameter of 903 nm, and the primary particles had an average particle diameter of 124 nm. It was detected that the Li0.78Ni1/3Co1/3Mn1/3O2 material prepared as described above had a compaction density of 3.62 g/cm³ and a powder impedance of 18 KΩ.

### Application Embodiment

### (1) Preparation of battery slurry, positive electrode and lithium battery.

The ternary material prepared in Embodiments 1 to 7 and Comparative Embodiments 1 to 4, a conductive agent (acetylene black) and a binder (polyvinylidene fluoride) were dispersed in a solution of N-methyl pyrrolidone (NMP) according to a weight ratio of 100:4:4 to form a battery slurry.

The battery slurry was coated on smooth aluminum foil having a thickness of 12 µm, and drying, die cutting and tablet compressing under a pressure of 2 Mpa were performed to form a positive electrode with a thickness of 37 µm.

A 053450 type single cell battery was fabricated using the positive electrode. In the battery, the negative electrode material was natural graphite, the separator material was a Celgard PE film commercially available from Celgard, and the electrolyte was 1 mol/L LiPF6/(EC+DMC) (LiPF6 was lithium hexafluorophosphate, EC was ethylene carbonate, DMC was dimethyl carbonate, and the volume ratio of EC to DMC was 1:1).

The batteries fabricated using the ternary materials prepared in Embodiments 1 to 7 and Comparative Embodiments 1 to 4 were designated as S1 to S7 and D1 to D4 respectively.

### (2) Electrochemical performance test

The test items and methods are as follows:
-20°C capacity retention rate test: The battery was charged at a constant current to 4.3 V at room temperature and a rate of 1 C, kept at a constant voltage of 4.3 V to a current of 0.1 C, then discharged at a constant current of 1 C to 2.5 V, charged at a constant current to 4.3 V at a rate of 1 C, kept at a constant voltage of 4.3 V to a current of 0.1 C, placed into a -20°C freezer, and discharged at a constant current to 2.5 V at a rate of 1 C. At this time, a ratio of the discharge capacity at -20°C to the discharge capacity at room temperature was the low-temperature capacity retention rate of the battery.

Discharge capacity retention rate test at rate of 5 C: The battery was charged at a rate of 0.2 C under CCCV to 4.3 V with the cut-off current of 0.02 C, and then discharged at a rate of 5 C under CC to 2.5 V. A ratio of the discharge capacity at the rate of 5 C to the discharge capacity at the rate of 0.2 C was the discharge rate efficiency at the rate of 5 C.

60°C, 30-day capacity recovery rate test: The battery was fully charged at 0.5 CCCV, stored in a 60°C oven for 30 days, taken out and discharged at 0.5 C to 2.5 V, charged at 0.5 CCCV to 4.3 V, and discharged to 2.5V. A ratio of the charge capacity after high-temperature storage to the charge capacity before storage of the battery was the high-temperature storage capacity recovery rate of the battery.

60°C, 1 C, 500-cycles capacity retention rate test: In the environment of 60°C, at a rate of 1 C, after the battery undergone 500 charge and discharge cycles, a ratio of the capacity of the 500th cycle to the capacity of the 1st cycle was the high-temperature cycle capacity retention rate of the battery.

Battery thickness increase: In an environment of 60°C, at a rate of 1 C, after the battery undergone 500 charge and discharge cycles, a difference between the thickness of the 500th cycle and the thickness of the 1st cycle was the thickness change value of the battery.

Battery internal resistance increase test: In an environment of 60°C, at a rate of 1 C, after the battery undergone 500 charge and discharge cycles, a difference between the battery resistance of the 500th cycle and the battery resistance of the 1st cycle was the internal resistance change value of the battery.

Test results: as shown in Table 1 and Table 2.

**Table 1**

| | S1 | S2 | S3 | S4 | S5 |
|---|---|---|---|---|---|
| -20 °C capacity retention rate (%) | 66 | 65.3 | 65.4 | 62.2 | 62.1 |
| Discharge capacity retention rate at rate of 5 C (%) | 95 | 94.1 | 94.2 | 93.1 | 92.3 |
| 60°C, 30-day capacity recovery rate (%) | 98.2 | 96.1 | 94.7 | 93.6 | 92.7 |
| 60°C, 1 C, 500-cycles capacity retention rate (%) | 87.8 | 87.5 | 87.2 | 84.6 | 82.3 |
| 60°C, 1 C, 500-cycles battery thickness increase (mm) | 0.19 | 0.2 | 0.22 | 0.26 | 0.28 |
| 60°C, 1 C, 500-cycles battery internal resistance increase (mΩ) | 1.5 | 1.6 | 1.6 | 1.9 | 2.1 |

**Table 2**

| | S6 | S7 | D1 | D2 | D3 | D4 |
|---|---|---|---|---|---|---|
| -20 °C capacity retention rate (%) | 63.8 | 64.2 | 52.7 | 60.4 | 54.6 | 54.3 |
| Discharge capacity retention rate at rate of 5 C (%) | 93.4 | 93.6 | 82.7 | 91.5 | 84.6 | 86.4 |
| 60°C, 30-day capacity recovery rate (%) | 94.4 | 91.9 | 92.8 | 84.3 | 92.4 | 88.5 |
| 60°C, 1 C, 500-cycles capacity retention rate (%) | 83.8 | 81.7 | 87.1 | 80.3 | 86.9 | 81.2 |
| 60°C, 1 C, 500-cycles battery thickness increase (mm) | 0.27 | 0.28 | 0.24 | 0.37 | 0.31 | 0.32 |
| 60°C, 1 C, 500-cycles battery internal resistance increase (mΩ) | 2.2 | 2.2 | 1.8 | 2.6 | 2.3 | 2.5 |

It can be seen that as compared with the batteries D1-D4, the batteries S1-S7 prepared by using the particles of the ternary material provided by the present invention have the following technical effects:
(1) by forming the primary particles and utilizing the characteristic of smaller particle diameter of the primary particles, the ternary material has a short lithium ion deintercalation path, thereby optimizing the low-temperature performance and rate performance of the lithium battery using the ternary material;
(2) by forming the secondary spheres, the primary particles are agglomerated together to reduce the specific surface area and porosity of the ternary material under the same mass, increase the compaction density of the ternary material and reduce thermal expansion and resistance change, thereby improving the safety performance of the lithium battery using the ternary material;
(3) by forming the intermediate particles, the loose primary particles agglomerated in the secondary spheres can be partially fused together to increase the compaction density and energy density of the ternary material, and optimize the heat storage performance and thermal cycle performance of the lithium battery using the ternary material; and
(4) by making the particles of the ternary material include three-level particles at the same time, the ternary material simultaneously has excellent low-temperature and rate performance of small particles and good high-temperature storage and high-temperature cycle performance of large particles.

The preferable implementations of the present invention have been described in detail above, but the present invention is not limited to the specific details in the above implementations, and various simple variations may be made to the technical solutions of the present invention within the scope of the technical idea of the present invention. These simple variations are all within the scope of the present invention.

It should be further noted that the specific technical features described in the above specific implementations may be combined in any suitable manner under the condition that no contradiction exists. To avoid unnecessary repetition, various possible combinations will not be described in the present invention.

In addition, the various implementations of the present invention may be combined arbitrarily as long as it does not deviate from the idea of the present invention, and the combination should also be regarded as the contents of the present invention.

## Claims

1. A ternary material, wherein the ternary material has a composition represented by the general formula LiNi_{1-x-y}CoₓM_{y}O₂, wherein the M is Mn or Al, 0<x<1, 0<y<1, x+y<1; and particles of the ternary material comprise three-level particles having a particle diameter ranging from small to large, the three-level particles comprise primary particles having a crystal structure, intermediate particles formed by partial melting of a plurality of primary particles, and secondary spheres formed by agglomeration of the intermediate particles.

2. The ternary material according to claim 1, wherein in the general formula LiNi_{1-x-y}CoₓM_{y}O₂ of the ternary material, 0.05≤x≤0.4, 0.03≤y≤0.5.

3. The ternary material according to claim 1 or 2, wherein the primary particles have an average particle diameter of less than 500 nm; and the intermediate particles have an average particle diameter of less than 3 µm, and the secondary spheres have an average particle diameter of 1 µm-20 µm.

4. The ternary material according to claim 3, wherein the primary particles have an average particle diameter of 10-200 nm; and the intermediate particles have an average particle diameter of 500 nm-2 µm, and the secondary spheres have an average particle diameter of 5-20 µm.

5. The ternary material according to any of claims 1-4, wherein the ternary material has a compaction density of greater than 3.2 g/cm³.

6. The ternary material according to claim 5, wherein the ternary material has a compaction density of 3.4-3.7 g/cm³.

7. The ternary material according to any of claims 1-6, wherein the ternary material has a powder impedance of 0.1-13 KΩ.

8. The ternary material according to claim 7, wherein the ternary material has a powder impedance of 0.1-5 KΩ.

9. The ternary material according to claim 8, wherein the ternary material has a powder impedance of 0.1-1 KΩ.

10. A preparation method of a ternary material, wherein the preparation method comprises the following steps:
S1, dissolving a soluble nickel salt, a cobalt salt, an M salt, a first lithium source and an oxidant system in a solvent to prepare a mixed solution, wherein the M is manganese or aluminum;
S2, promoting an oxidation reaction of the mixed solution, after the reaction, filtering, washing, and drying an oxidation reaction product to obtain precursor powder, and then mixing a second lithium source into the precursor powder to obtain mixed powder;
S3, performing primary sintering on the mixed powder to obtain secondary spheres; and
S4, performing secondary sintering on the secondary spheres to obtain the ternary material;
wherein, the temperature of the secondary sintering is higher than the temperature of the primary sintering.

11. The preparation method according to claim 10, wherein the primary particles have an average particle diameter of less than 500 nm; the intermediate particles have an average particle diameter of less than 3 µm, and the secondary spheres have an average particle diameter of 1-20 µm.

12. The preparation method according to claim 11, wherein the primary particles have an average particle diameter of 10-200 nm; the intermediate particles have an average particle diameter of 500 nm-2 µm, and the secondary spheres have an average particle diameter of 5-20 µm.

13. The preparation method according to any of claims 10-12, wherein the oxidant system comprises an oxidant and a pH adjusting agent, and the step of preparing the mixed solution in S1 comprises steps of:
S11, dissolving the nickel salt, the cobalt salt and the M salt in the solvent to form a solution A;
S12, dissolving the oxidant in the solvent to form a solution B;
S13, dissolving the pH adjusting agent and the first lithium source in the solvent to form a solution C; and
S14, stirring and mixing the solution A, the solution B and the solution C, and continuously stirring for 30-60 min after mixing to obtain the mixed solution;
wherein, when the M salt and the oxidant are simultaneously potassium permanganate, the potassium permanganate is partially dissolved in the solution A, partially dissolved in the solution B, or all dissolved in the solution B.

14. The preparation method according to claim 13, wherein the molar ratio of Ni, Co and M elements in the mixed solution is (1-x-y):x:y, wherein 0.05≤x≤0.4, 0.03≤y≤0.5.

15. The preparation method according to claim 13 or 14, wherein the molar weight of Li in the mixed solution is 1 to 8 times the total molar weight of Ni, Co and M.

16. The preparation method according to any of claims 13-15, wherein the oxidant is used in an amount such that a combined valence of Ni, Co and M in the mixed solution is +3.

17. The preparation method according to any of claims 13-16, wherein the oxidant is one or more selected from hydrogen peroxide, potassium permanganate and sodium thiosulfate.

18. The preparation method according to any of claims 13-17, wherein the pH adjusting agent is one or more selected from ammonia water, sodium hydroxide, potassium hydroxide, sulfuric acid, nitric acid and hydrochloric acid.

19. The preparation method according to any of claims 10-18, wherein conditions for the oxidation reaction in S2 comprise: firstly charging an oxygen-containing gas to the inside of a reactor until the internal pressure of the reactor is 0.6-1.2 Mpa, and then under a sealed condition, raising the internal temperature of the reactor to 170-220°C, and performing a reaction under constant temperature and constant pressure for 8 h or longer.

20. The preparation method according to any of claims 10-19, wherein the step of mixing the second lithium source into the powder product in S2 comprises steps of: measuring the molar weights of Li, Ni, Co and Mn in the precursor powder, and calculating the molar ratio of Li to the total amount of Ni, Co and Mn; according to the molar ratio of Li to the total amount of Ni, Co and Mn, converting the amount of the second lithium source added such that the molar ratio of Li to the total amount of Ni, Co and Mn in the mixed powder is (1-1.1):1; and mixing the precursor powder with the second lithium source in proportion to obtain the mixed powder.

21. The preparation method according to any of claims 10-20, wherein conditions for the primary sintering in S3 comprise: sintering at 600-900°C for 8 h or longer in an oxygen-containing atmosphere.

22. The preparation method according to claim 21, wherein the conditions for the primary sintering in S3 comprise: sintering at 700-800°C for 8-24 h in the oxygen-containing atmosphere.

23. The preparation method according to any of claims 10-22, wherein conditions for the secondary sintering in S4 comprise: sintering at 900-1100°C for 10-60 min.

24. The preparation method according to claim 23, wherein the conditions for the secondary sintering in S4 comprise: sintering at 900-1000°C for 10-60 min.

25. The preparation method according to claim 10 to 24, wherein
a nickel source is one or more selected from nickel sulfate, nickel nitrate and nickel chloride;
a cobalt source is one or more selected from cobalt sulfate, cobalt nitrate and cobalt chloride;
a manganese source is one or more selected from manganese sulfate, manganese nitrate, manganese chloride and potassium permanganate; and
the first lithium source and the second lithium source are each independently one or more selected from lithium hydroxide, lithium carbonate, lithium chloride, lithium nitrate and lithium sulfate.

26. The preparation method according to claim 25, wherein the first lithium source is lithium hydroxide.

27. A ternary material prepared by the preparation method according to any of claims 10 to 26.

28. A battery slurry, wherein the battery slurry is a slurry composition with a solid content of 10-70 wt% being prepared from the ternary material according to any of claims 1 to 9, and 26.

29. A positive electrode, comprising a current collector and a positive electrode material layer disposed on the current collector, wherein the positive electrode material layer comprises the ternary material according to any of claims 1 to 9, and 27.

30. A lithium battery, comprising a positive electrode, wherein the positive electrode comprises the positive electrode according to claim 29.
